# EUROPÄISCHE PATENTSCHRIFT

(11) **EP 1 893 545 B1**
(45) Veröffentlichungstag und Bekanntmachung des Hinweises auf die Patenterteilung: **12.08.2015**
(21) Anmeldenummer: 06754331.4
(22) Anmeldetag: 13.06.2006
(51) Int. Cl.: C03C 27/10, B32B 17/10, E06B 3/02, C09J 175/04, C08L 63/00

(54) **BRANDSCHUTZGLAS UND VERFAHREN ZU DESSEN HERSTELLUNG**
FIRE-RESISTANT GLASS AND METHOD FOR THE PRODUCTION THEREOF
VERRE COUPE-FEU ET PROCEDE DE PRODUCTION DE CE VERRE

(30) Priorität: 13.06.2005 DE 102005027404
(43) Veröffentlichungstag der Anmeldung: 05.03.2008
(73) Patentinhaber: Pilkington Deutschland AG, 45884 Gelsenkirchen (DE)
(72) Erfinder: SCHRÖDERS, Theo, 41812 Erkelenz (DE); SCHERRER, Kurt, CH-6205 Sempach (CH)
(74) Vertreter: Marsh, Andrew James
(86) Internationale Anmeldenummer: PCT/EP2006/005661
(87) Internationale Veröffentlichungsnummer: WO 2006/133896

(56) Entgegenhaltungen:
- EP-A1- 0 889 106
- EP-A2- 1 650 397
- FR-A1- 2 601 943
- GB-A- 2 023 452
- JP-A- 2003 048 953
- US-A- 5 698 277
- US-A1- 2004 122 186

## Beschreibung

Die Erfindung betrifft ein Brandschutzglas, umfassend eine Mehrzahl von parallel zu einander angeordneten Glasscheiben mit zwischen benachbarten Glasscheiben eingelagertem Brandschutz-Material und einer Dichtungsschicht zum Abdichten der freien Oberflächen des Brandschutz-Materials, welche im Bereich von Stirnflächen des Brandschutzglases ausgebildet sind.

Des weiteren betrifft die Erfindung ein Verfahren zum Herstellen eines Brandschutzglases, umfassend die Schritte Übereinanderschichten einer Mehrzahl von Glasscheiben und Einlagern von Brandschutz-Material zwischen benachbarten Glasscheiben, so dass zwischen Schnittflächen zweier benachbarter Glasscheiben freie Oberflächen des Brandschutz-Materials entstehen, die nicht durch eine der Glasscheiben abgedeckt sind und Vorsehen einer Dichtungsschicht zum Abdichten der freien Oberflächen des Brandschutz-Materials.

Die eingangs genannten Brandschutzgläser und das vorstehend beschriebene Verfahren zu deren Herstellung sind aus dem Stand der Technik bekannt. Brandschutzgläser dienen z.B. als Brandschutzabschluss einer Öffnung in einer Wand oder auch in einer ansonsten nicht durchsichtig ausgebildeten Füllung eines Türblatts. Brandschutzgläser müssen so ausgebildet sein, dass sie für einen vorbestimmten Zeitraum, z.B. 30,60 oder 90 Minuten, der Einwirkung von Feuer und Hitze standhalten können. Insbesondere dürfen sie kein Durchschlagen von Flammen erlauben und müssen unter Umständen als Zusatzanforderung einen Raum auch sicher gegen Rauch abschließen. Weiterhin müssen sie in bestimmten Anwendungen eine gute Isolierung gegen Wärme bieten und die Strahlungshitze eines Brandherdes begrenzen. Anforderungskriterien an Brandschutzabschlüsse, insbesondere Brandschutzgläser, sind insbesondere in den europäischen Normen EN 1363-1 "Feuerwiderstandsprüfungen, allgemeine Anforderungen" sowie DIN EN 1634 Teil 1 "Feuerwiderstandsprüfungen für Türen und Abschlusseinrichtungen, Teil 1-Feuerabschlüsse" geregelt.

Das zwischen benachbarten Glasscheiben angeordnete Brandschutz-Material umfasst Wasserglas, insbesondere auf Basis von Natriumsilikat oder Kaliumsilikat, außerdem Wasser und weitere Zusatzstoffe wie z.B. Gelbildner. Bei Raumtemperatur ist das Brandschutz-Material üblicherweise transparent und eignet sich deshalb sehr gut für die beschriebene Verwendung bei transparenten Verglasungen, da es zwischen den Glasscheiben nicht sichtbar ist. Bei Hitzeeinwirkung jedoch, wie sie insbesondere durch Feuer verursacht sein kann, schäumt das wasserhaltige Brandschutz-Material unter Bildung eines sich verfestigenden Silikat-Schaums auf, mit der Folge, dass die Dicke der Brandschutzgläser beträchtlich zunimmt. Dieses Aufschäumen ist erwünscht, um auf diese Weise eine Öffnung, in der das Brandschutzglas eingesetzt ist, bei Feuer gegen einen Durchtritt von Rauch und Flammen sowie gegebenenfalls auch von Wärmestrahlung zuverlässig abzudichten. Außerdem bewirkt das Aufschäumen und das Verdampfen des im Brandschutz-Material gebundenen Wassers eine temporäre Kühlung des Brandschutzglases und beugt demzufolge einem Bersten jedenfalls der feuerabgewandten Glasscheibe(n) der Verglasung vor.

Übliche Brandschutz-Materialien für Brandschutzgläser, insbesondere Schichten aus dem zuvor erwähnten wasserhaltigen Wasserglas, sind jedoch sehr empfindlich gegen äußere Einflüsse. Insbesondere sind sie hygroskopisch, d.h. wirken anziehend auf Wasser bzw. Wasserdampf und reagieren mit denselben. Ebenso treten Reaktionen mit Kohlendioxid auf. Ungünstigerweise sind Wasserdampf und Kohlendioxid in normaler Raumluft oder Außenluft stets in gewissem Maße vorhanden. Schon bei Kontakt mit geringer Luftfeuchtigkeit und geringen Kohlendioxidkonzentrationen zersetzt sich das Brandschutz-Material, wird milchig und löst sich an den Rändern des Brandschutzglases, an denen das Brandschutz-Material freie Oberflächen bildet, die nicht durch eine der Glasscheiben abgedeckt sind, auf. Durch die milchigen Verfärbungen des Brandschutz-Materials wird dessen oben beschriebene gewünschte Wirkungsweise im Brandfall zwar nicht notwendigerweise wesentlich beeinträchtigt, jedoch sind diese milchigen Verfärbungen bei den ansonsten transparenten Brandschutztüren aus optischen bzw. ästhetischen Gründen nicht tolerabel. Unerwünscht und der Brandschutzwirkung abträglich ist es außerdem, wenn im Laufe der Zeit das in der Brandschutz-Zwischenschicht befindliche Wasser im Randbereich aus dem Brandschutzglas austritt und verdunstet.

Um das eingelagerte Brandschutz-Material vor äußeren Einwirkungen zu schützen und dem Verlust von eingelagertem Wasser entgegen zu wirken, wird im Stand der Technik auf die Stirnseiten der Brandschutzverglasung, d.h. auf die Schnittflächen der einzelnen Glasscheiben und auf die dazwischen befindlichen freien Oberflächen des Brandschutz-Materials, ein Kantenschutzband aus einer selbstklebend ausgestatteten und durch eine Kunststoffbeschichtung nach außen hin mechanisch geschützten Aluminium-Folie aufgeklebt, welches mit Randstreifen ein Stück weit über die Stirnseite hinausreicht und sich deshalb bis auf die innere und/oder äußere Ansichtsseite der Brandschutzverglasung erstreckt. Die Aluminiumfolie ist auch bei vergleichsweise geringer Dicke sehr diffusionsdicht gegen Gase wie auch gegen Wasser, d.h. sie verhindert insbesondere einen Kontakt von Luftfeuchtigkeit und Kohlendioxid mit den freien Oberflächen des Brandschutz-Materials. Die erwähnten Randstreifen der Kantenschutzbänder auf beiden Ansichtsseiten des Brandschutzglases sind insbesondere dann optisch störend, wenn das Brandschutzglas als vollflächig transparente rahmenlose Verglasung, z.B. als rahtrienlose Brandschutzglastür (Ganzglas-Brandschutzglastür), ausgebildetsein soll. Der Begriff "rahmenlose Verglasung" umfasst auch solche Einbausituationen, bei denen nicht alle Kanten, sondern nur ein Teil dieser ohne die Kante umfassenden Rahmen eingebaut werden. Bei den bislang typischerweise vorhandenen Einbausituationen, nämlich dem Einbau der Brandschutzverglasung in umlaufende U-förmige oder rechteckförmige Stahl- bzw. Aluminium- oder Holz-Einfassprofile, stören die besagten Randstreifen der Kantenschutzbänder nicht, da sie dann durch die vorgenannten Profile überdeckt werden.

Das gemäß dem Stand der Technik praktizierte Aufkleben einer Metallfolie, insbesondere Aluminiumfolie, als Kantenschutzband hat jedoch diverse Nachteile. So kann sich die Verklebung der Folie auf Dauer lösen, so dass dann eine Abdichtung der freien Oberflächen des Brandschutz-Materials, z.B. gegen Luftfeuchtigkeit bzw. Wasser(dampf)-Diffusion, nicht mehr gewährleistet wäre. Weiterhin ist die Verklebung bei den auch in Brandschutzverglasungen häufig eingebrachten Durchdringungen, also Öffnungen z.B. für Profilzylinder oder Drückerstifte oder andere Glasbeschläge, nicht bzw. nur schwierig möglich, weil die Platzverhältnisse dort beengt und die Krümmungsradien zu klein sind. Schließlich sind die erwähnten Randstreifen der Kantenschutzbänder auf den Ansichtsseiten einer ansonsten transparenten Brandschutzverglasung optisch störend. Versuche, die Abdichtung der Brandschutzgläser auf die Stirnseiten zu begrenzen, scheiterten bislang aus unterschiedlichen Gründen.

US 5698277 A lehrt ein Zweischeiben-Brandschutzglas, wobei das Brandschutzmaterial durch Abstandshalter und ein Alkyl-Polysulfid eingeschlossen wird.

Es ist aus diesem Grunde Aufgabe der vorliegenden Erfindung, ein Brandschutzglas derart weiter zu entwickeln, dass es zum einen optisch bzw. ästhetisch auch bei Verwendung für Ganzglas-Brandschutztüren oder andere rahmenlose Brandschutzverglasungen eine weitgehend ungestörte Durchsicht auch im Randbereich der Verglasung ermöglicht, ohne dass die Abdichtungsqualität gegenüber der bekannten Verwendung von selbstklebenden Aluminiumfolien signifikant verschlechtert wird. Insbesondere soll sich die Dichtungsschicht auch auf den Stirnseiten im Bereich der zuvor genannten Durchdringungen (Bohrungen, Ausschnitte) aufbringen lassen. Eine weitere Aufgabe besteht darin, eine Dichtungsschicht für Brandschutzgläser anzugeben, die mit üblichen Brandschutz-Materialien, insbesondere solchen auf Wasserglasbasis, verträglich ist, die eine dauerhafte Abdichtung während der Lebensdauer von Brandschutzverglasungen ermöglicht und die gegen Umgebungseinflüsse, wie z.B. Feuchtigkeitseinwirkung, unempfindlich ist.

Ausgehend von einem Brandschutzglas der eingangs beschriebenen Art, wird diese Aufgabe erfindungsgemäß dadurch gelöst, dass die Dichtungsschicht im wesentlichen ausschließlich im Bereich der Stirnflächen des Brandschutzglases ausgebildet ist und aus einem Silan/Epoxid-Klebe-Dichtstoff besteht. Derartige Klebe-Dichtstoffe werden häufig als Hybrid-Klebe-Dichtstoffe bezeichnet.

Der Erfindung liegt zunächst die Erkenntnis zugrunde, dass bei einer Verwendung von Brandschutzglas für Ganzglastüren oder andere rahmenlose Verglasungen die Erstreckung der Dichtungsschicht bis auf die Ansichtsseiten des Brandschutzglases nicht akzeptabel, weil ästhetisch und haptisch nicht hinnehmbar, ist. Aus diesem Grunde werden erfindungsgemäß die beiderseitigen Ansichtsseiten des Brandschutzglases weitestgehend von der Dichtungsschicht freigehalten. Unter dem Begriff "im wesentlichen ausschließlich im Bereich der Stirnflächen" soll im Sinne der vorliegenden Anmeldung verstanden werden, dass ein Auftrag der Dichtungsschicht auf die Ansichtsflächen des Brandschutzglases vermieden wird, dass jedoch aus fertigungstechnischen Gründen eine minimale Beaufschlagung auch der angrenzenden Ansichtsseiten möglicherweise nicht vollständig vermeidbar ist bzw. nur mit einem unverhältnismäßig großen Aufwand gänzlich zu vermeiden wäre. Eine derartige im Rahmen der Erfindung nicht angestrebte Erstreckung der Dichtungsschicht auf die Ansichtsseiten der Verglasung kann gegebenenfalls bis zu einer Größenordnung von etwa 1 mm Breite akzeptiert werden. Zum Vergleich beträgt die Breite der Randstreifen von üblichen Kantenschutzbändern etwa 6 bis 15 mm.

Hybridklebe-Dichtstoffe sind Reaktionsklebstoffe, die durch mindestens zwei chemisch verschiedenartige Reaktionsmechanismen aushärten und die sich als Dichtstoffe eignen. Es kommen hierbei zumindest zwei verschiedene Polymerharze zum Einsatz, weshalb man auch von Polymerlegierungen spricht. Im Falle eines Silan/Epoxid-Klebe-Dichtstoffs wird zumindest ein Silan-funktionalisiertes Harz mit zumindest einem Epoxidharz, insbesondere mit zumindest einem 2K-Epoxidharz kombiniert. Die hochelastischen, flexiblen und zähen Eigenschaften eines Silanklebstoffs können in derartigen Klebe-Dichtstoffen mit den hochfeste, jedoch spröden Eigenschaften eines Epoxidklebstoffs kombiniert werden. Im ausgehärteten Zustand liegen in derartigen Klebe-Dichtstoffen Epoxid-Partikel (harte Domänen) vor, die in eine Silan-vernetzte Matrix eingebettet sind. Zugspannung und Bruchdehnung von Silan/Epoxid-Klebe-Dichtstoffen sind derart, dass sie die diesbezügliche Lücke in der Klebstofftechnik zwischen Silikonen und 2K-PU-Strukturklebstoffen in besonders geeigneter Weise schliessen (vergl. z.B. Damien Ferrand, Willi Schwotzer in Adhesives & Sealants Industry magazine, BNP Media, http://www.adhesivesmag.com, April 2004; und Christian Terfloth, "Automotive Circle International" Conference, 17/18 Oktober 2002, S. 33-42).

Der für das erfindungsgemäße Brandschutzglas verwendete Klebe-Dichtstoff weist ein Silanharz und ein Epoxidharz auf, und umfasst vorzugsweise weiter
a) mindestens ein nicht-aromatisches, tertiäres Di- oder Polyamin, insbesondere ausgewählt aus der Gruppe bestehend aus aliphatischen Aminen, cycloaliphatischen Aminen, Amido-Aminen, sowie Mischungen davon; und
b) mindestens einen Silan-Katalysator, welcher keine Amin-Verbindung ist, insbesondere eine Organometall-Verbindung, vorzugsweise ausgewählt aus der Gruppe bestehend aus Organozinn-Verbindungen, Organozirkonat-Verbindungen, Organotitanat-Verbindungen, sowie Mischungen davon.

Mit dem erfindungsgemäß vorgesehenen Hybridklebe-Dichtstoff lässt sich die gewünschte hohe Lichtdurchlässigkeit bzw. Transluzenz realisieren sowie ein für senkrechte Applikationen geeignetes Fließverhalten bei ausreichender Shore A-Härte und Zugfestigkeit erzielen.

Unter einem Silanharz (silanterminiertes Polymer) werden hierbei Polymere verstanden, deren Rückgrat aus einem Polymer, insbesondere einem Polyurethan, Silikon, Polyether oder Polyolefin gebildet ist, welches mit Siloxangruppen modifiziert ist. Besonders bevorzugt sind aufgrund ihrer Reaktivität die Methoxysilane, welche unter Feuchtigkeitseinfluss vernetzen:

2 (CH₃O)ₘ(CH₃)ₙSi-R-Si(OCH₃)ₘ(CH₃)ₙ + H₂O →

(CH₃O)ₘ(CH₃)ₙSi-R-Si(OCH₃)ₘ₋₁(CH₃)ₙ-O-Si(OCH₃)ₘ₋₁(CH3)ₙ₋O-Si(OCH₃)ₘ(CH₃)ₙ + 2 CH₃OH

(mit m = 3, 2, 1; n = 0, 1, 2; m + n = 3)

Im Rahmen der vorliegenden Erfindung besonders bevorzugte Silanharze sind silanterminierte Polyurethane (z.B. Baycoll® XP 2458 auf Basis eines Polyetherpolyols) bzw. Reaktanten, die zur Bildung eines silanterminierten Polyurethans befähigt sind. Geeignete Reaktanten sind dem Fachmann bekannt (beispielsweise Isocyanat-terminierte Polyetherpolyole und Aminosilane wie z.B. Dynasylan® DAMO-T).

Die Silanvernetzung wird in gängiger Praxis insbesondere durch Organometall-, vorzugsweise Zinnkatalysatoren oder durch Amine katalysiert, die sich hervorragend bewährt haben; prinzipiell geeignet sind jedoch alle Broenstedt/Lewis Säuren und Basen, die geeignet sind, den geschwindigkeitsbestimmenden Schritt, die Hydrolyse des Silanesters, zu katalysieren. Ein Aminkatalysator wäre in einem Silan/Epoxid-Klebe-Dichtstoff besonders bevorzugt einzusetzen, da er auch die Epoxidvernetzung katalysiert:

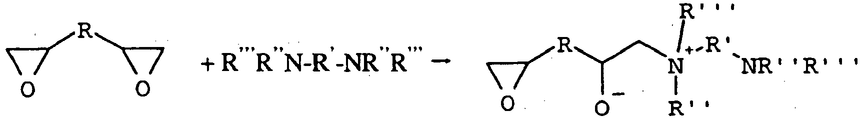

Die eigentlich aufgrund ihrer höheren Reaktivität bevorzugten aromatischen Amine weisen jedoch den vorliegend untolerablen Effekt auf, dass sie Verfärbungen erzeugen, die den optischen Eindruck stören. In der vorliegenden Erfindung kommen daher als Bestandteil a) nicht-aromatische Amin-Katalysatoren zum Einsatz. Ein nicht-aromatischer Amin-Katalysator wurde jedoch als alleine nicht geeignet befunden, in einem verdickten Klebe-Dichtstoff eine derart vollständige Vernetzung zu erzeugen, dass die gewünschte Shore A Härte von ≥ 60, vorzugsweise von ≥ 65, besonders bevorzugt von ≥ 70, im ausgehärteten Zustand resultiert. Es wurde gefunden, dass die nicht ausreichende Shore A Härte auf eine nicht vollständige Vernetzung des Siloxan-Anteils zurückzuführen ist. In der vorliegenden Erfindung kommt daher als Bestandteil b) ein weiterer Silan-Katalysator zum Einsatz, welcher keine Amin-Verbindung ist. Besonders bevorzugt als Silan-Katalysator sind Organozinn-Verbindungen.

Der Klebe-Dichtstoff weist vorzugsweise eine derartige Standfestigkeit auf, dass er nach der Applikation in einer Auftragsdicke von ca. 1 mm, vorzugsweise von ca. 2 mm, besonders bevorzugt von ca. 3 mm an einer senkrechten Glasfläche aus Standardglas I der HVG-DGG (Hüttentechnische Vereinigung der deutschen Glasindustrie e.V., Deutsche Glastechnische Gesellschaft e.V.) sowie einer Zwischenschicht aus Brandschutz-Material nicht abläuft. Zu diesem Zweck können eine Vielzahl von Füllstoffen beigegeben werden, wenn es lediglich darum geht, eine derartige Standfestigkeit zu erzielen. Bevorzugt wird jedoch ein Füllstoff verwendet, welcher die Lichtdurchlässigkeit (Transparenz bzw. Transluzenz) nicht signifikant behindert.

Als besonders vorteilhaft hat sich eine hydrophobe, insbesondere mit Hexamethyldisilazan modifizierte, pyrogene Kieselsäure herausgestellt, welche eine spezifische Oberfläche (BET) von ≥ 160 m²/g, vorzugsweise von ≥ 200 m²/g, besonders bevorzugt von ≥ 240 m²/g, aufweist,. Derartige Produkte sind im Handel erhältlich, bspw. unter dem Handelsnamen Aerosil® R 812 (Degussa AG).

In besonders bevorzugten Ausführungsformen weist ein derartiger Klebe-Dichtstoff nach einer Lagerung während 24 Stunden unter Luftzutritt bei 70°C keine signifikante Verfärbung und/oder Trübung auf.

Als Katalysatoren geeignete nicht-aromatische Polyamine sind dem Fachmann geläufig. Besonders bevorzugt ist als Bestandteil a) ein nicht-aromatisches Polyamin eingesetzt, ausgewählt aus der Gruppe bestehend aus DABCO (1,4-diazabicyclo[2.2.2]octane), DBU (1,8-Diazabicyclo[5.4.0]undec-7-ene), DBN (1,5-Diazabicyclo[4.3.0]non-5-ene), 7-Methyl-1,5,7-triazabicyclo[4.4.0]dec-5-ene, 1,2,2,6,6-Pentamethylpiperidine, N,N-Diisopropyl-3-pentylamine, N-Ethyldiisopropylamine, 2-tert-Butyl-1,1,3,3-tetramethylguanidine, N,N'-Dimethylpiperazine, 1,8-Diazabicyclo-5,4,0-undecen-7, sowie Mischungen davon.

Besonders bevorzugt ist als Bestandteil a) 1,8-Diazabicyclo-5,4,0-undecen-7, 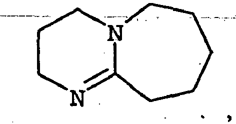 erhältlich unter dem Handelsnamen Lupragen N700 (BASF).

In besonders bevorzugten Ausführungsformen ist als Bestandteil b) eine Organozinnverbindung eingesetzt, ausgewählt aus der Gruppe bestehend aus Dioctylzinndi(2-ethylhexanoat)Lösung, Dioctylzinndilaurat, Dioctylzinnoxid, Dibutylzinndilaurat, Dibutylzinndicarboxylat, Butylzinntris-(2-ethylhexanoat), Dibutylzinndineodecanoat, Laurylstannoxan, Dibutylzinndiketanoat, Dioctylzinnoxid, Dibutylzinndiacetat, Dibutylzinnmaleat, Dibutylzinndichlorid, Dibutylzinnsulfid, Dibutylzinnoxid, Butylzinndihydroxychlorid, Butylzinnoxid, Dibutylzinn(dioctylmaleinat), Tetrabutylzinn, Zinkricinoleat, Zinkoctoat, Zinkacetylacetonat, Zinkoxalat, sowie Mischungen davon.

Die alternativ oder ergänzend einsetzbaren Organozirkonat- oder Organotitanat-Verbindungen sind dem Fachmann geläufig und beispielsweise von DuPtint unter dem Markennamen Tyzor® erhältlich.

Besonders bevorzugt ist als Bestandteil b) Laurylstannoxan, [(C₄H₉)₂Sn(OOCC₁₁H₂₃)]₂O, eingesetzt, welches im Handel erhältlich ist (Tegokat® 225, Goldschmidt TIB GmbH, Mannheim, Deutschland).

In besonders bevorzugten Ausführungsformen weist der erfindungsgemässe Klebe-Dichtstoff im ausgehärteten Zustand eine Zugfestigkeit gemäss DIN 53455 (Aluminium) von ≥ 7 MPa, bevorzugt von ≥ 8 MPa, besonders bevorzugt von ≥ 9 MPa auf.

Silanterminierte Polyurethanharze und silanterminierte Polyether sind grundsätzlich äquivalent einsetzbar. Es wurde jedoch gefunden, dass silanterminierte Polyurethanharze, insbesondere auf Basis von Polyetherpolyolen, im Rahmen der vorliegenden Erfindung, d.h. der Anwendung bei Brandschutzgläsern, eine Zugfestigkeit gewährleisten können, welche derjenigen unter Einsatz von silanterntinierten Polyethern überlegen ist.

Bei dem vorliegenden Klebe-Dichtstoff handelt es sich vorzugsweise um einen 2-Komponenten-Klebstoff, der bspw. in gängigen Doppelkartuschen oder geeigneten Schlauchbeuteln dargereicht werden kann. Hierbei werden das nicht-aromatische Polyamin und der Silan-Katalysator vorzugsweise in getrennten Komponenten vorliegen. Denkbar ist jedoch bei entsprechender Deaktivierung oder Verkapselung eines reaktiven Bestandteils, bspw. des Epoxids, auch eine 1K-Darreichung des erfindungsgemässen Klebe-Dichtstoffs.

Wie vorstehend ausgeführt, soll die Transparenz bzw. Transluzenz des zur Abdichtung der freien Oberflächen des Brandschutz-Materials auf die Stirnkante des Brandschutzglases applizierten Hybridklebe-Dichtstoffs möglichst hoch sein. Der im Rahmen der Erfindung einzusetzende Klebe-Dichtstoff weist daher besonders bevorzugt im ausgehärteten Zustand bei einer Schichtdicke von 1 mm, hinterlegt mit einem BaSO₄-Hintergrund (Ulbricht'sche Kugel), eine Lichtdurchlässigkeit (Transparenz oder Transluzenz) im sichtbaren Bereich von ≥ 30%, vorzugsweise von ≥ 40%, besonders bevorzugt von ≥ 50% auf.

Es wird somit im Rahmen der Erfindung in dem Klebe-Dichtstoff eine Katalysator-Kombination verwendet, umfassend
a) mindestens ein nicht-aromatisches, tertiäres Di- oder Polyamin, insbesondere ausgewählt aus der Gruppe bestehend aus aliphatischen Aminen, cycloaliphatischen Aminen, Amido-Aminen, sowie Mischungen davon; und
b) mindestens einen Silan-Katalysator, welcher keine Amin-Verbindung ist, insbesondere eine Organometall-Verbindung, vorzugsweise ausgewählt aus der Gruppe bestehend aus Organozinn-Verbindungen, Organozirkonat-Verbindungen, Organotitanat-Verbindungen, sowie Mischungen davon;
wodurch Verfärbungen und/oder Trübungen vermieden werden können.

Die Erfindung sieht vor, die Dichtungsschicht für das Brandschutzglas aus dem - vorzugsweise transparenten oder transluzenten - Hybridklebe-Dichtstoff zu bilden, ohne zur Abdichtung zusätzlich eine Metallfolie zu verwenden. Ein Verzicht auf eine Metallfolie vereinfacht die Verarbeitung und führt des weiteren dazu, dass auch im ausgehärteten Zustand eine völlige transparente oder transluzente Dichtungsschicht ermöglicht wird, was bei metallischen Werkstoffengrundsätzlich nicht möglich ist. Des weiteren ist auch die Realisierung von Temperaturniveaus während des Auftragsvorgangs der Dichtungsschicht möglich, die nahe der Raumtemperatur liegen. Bei dem erfindungsgemäßen Klebe-Dichtstoff kann es sich um einen solchen handeln, der in flüssiger oder dampfförmiger Form aufgetragen wird, aber grundsätzlich auch um einen solchen, der bereits vor dem Auftrag fest, dann insbesondere plastisch und mit guten Klebeeigenschaften versehen ist. Typischerweise erfolgt der Auftrag des Materials der Dichtungsschicht jedoch in flüssiger bzw. pastöser Form, da in diesem Fall die geringsten Anforderungen an die Einhaltung bestimmter Raumklimata beim Auftragsprozess zu stellen sind.

Im Rahmen der vorliegenden Erfindung ist der Begriff "Abdichten einer freien Oberfläche" so zu verstehen, dass die Dichtungsschicht direkt oder indirekt, das heißt gegebenenfalls unter Zwischenschaltung eines Haftvermittlers oder einer anderweitigen geeigneten Zwischenschicht, auf die freien Oberflächen des Brandschutz-Materials und auf angrenzende Kanten der benachbarten Glasscheiben so aufgebracht ist, dass die freien Oberflächen vollständig überdeckt sind. Des weiteren ist im Rahmen der vorliegenden Anmeldung der Begriff "freie Oberfläche" des Brandschutz-Materials jeweils so zu verstehen, dass diese nicht mit einer der Glasscheiben des Brandschutzglases in Berührung steht bzw. durch diese abgedeckt ist.

Bei dem erfindungsgemäßen Aufbringen der Dichtungsschicht im flüssigen bzw. pastösen Zustand ergibt sich der Vorteil, dass es zu einer sehr starken Bindung an die betreffenden Oberflächen, auf die das Material der Dichtungsschicht aufgebracht wurde, und zum Ausfüllen etwaiger Fugen oder Nuten im Randbereich der Verglasung kommt. Dies bewirkt eine verbesserte Abdichtung der so behandelten Oberflächenbereiche, insbesondere auch gegen Wasserdampfdiffusion. Aufgrund dieser verbesserten Dichtwirkung ist ein Aufbringen der Dichtungsschicht auf Randbereiche der Ansichtsseiten des Brandschutzglases entbehrlich, ohne dass die Abdichtungsqualität darunter leidet. Aus diesem Grunde eignet sich das erfindungsgemäß abgedichtete Brandschutzglas in sehr vorteilhafter Weise dazu, für Ganzglas-Brandschutztüren oder andere rahmenlose Verglasungen Verwendung zu finden. Ein weiterer besonders vorteilhafter Anwendungsfall besteht in der Abdichtung der freien Oberflächen des Brandschutz-Materials im Bereich von Durchdringungen des Brandschutzglases, insbesondere Durchdringungen für Profilzylinder oder Drückerstifte oder andere Beschläge. Auch in diesen nach dem Stand der Technik nur sehr schwierig abdichtbaren Bereichen lässt sich erfindungsgemäß mit vergleichsweise geringem technischem Aufwand eine zuverlässige Abdichtung erzielen.

Im Rahmen der Erfindung werden Hybridklebe-Dichtstoffe mit erhöhtem Dampfdurchlasswiderstand und gutem Anhaftvermögen an Glas, nämlich Stoffe, die auf silanterminierten oder silanisierten Polymeren basieren, verwendet. Die Hybridklebe-Dichtstoffe sollen möglichst frei von Isocyanat, Silikonöl, Phthalat-Weichmachern und Lösungsmitteln sein, um sowohl die Verarbeitung in gesundheitlicher Hinsicht unproblematisch zu gestalten als auch bei der späteren Entsorgung möglichst keine Probleme aufzuwerfen. Klebe-Dichtstoffe auf Basis von silanterminierten Polymeren zeichnen sich durch ihre Dampf-Diffusionsdichtigkeit, ihre gute Alterungsbeständigkeit, eine hinreichende Elastizität sowie ein hohes Anhaftvermögen an Glas aus. Überraschenderweise verfügen die erfindungsgemäß zur Abdichtung von Brandschutzgläsern verwendeten Klebe-Dichtstoffe auch über eine gute und dauerhafte Verträglichkeit mit üblichen wasserglashaltigen Brandschutz-Materialien, so dass die erzielte Abdichtung auch langfristig stabil ist.

Wie bereits ausgeführt, handelt es sich bei dem Hybridklebe-Dichtstoff vorzugsweise um einen Zweikomponenten-Klebe-Dichtstoff, bei dem eine Komponente aus silanterminiertem Polymer und die andere Komponente aus Epoxidharz besteht, wobei die beiden vorgenannten Komponenten typischerweise im Gewichtsverhältnis zwischen 1:1 und 10:1, vorzugsweise etwa 2:1, gemischt werden.

Eine besonders vorteilhafte Weiterbildung der Erfindung besteht darin, dass zusätzlich zur Dichtungsschicht ein die Ränder des Brandschutzglases und/oder die Ränder von dessen Durchdringungen einfassendes Kantenschutzprofil zumindest bereichsweise vorgesehen ist. Dieses vorzugsweise aus einem transparenten oder durchscheinenden (transluzenten) Kunststoffmaterial, insbesondere aus transparentem Silikonelastomer, bestehende Kantenschutzprofil hat beispielsweise die Aufgabe, die Ränder bzw. Kanten des Brandschutzglases gegen mechanische Einwirkungen zu schützen, kann aber auch als Beschlag, z.B. zur Halterung der Verglasung, dienen. Das Schutzprofil ist in seinem Querschnitt vorzugsweise U-förmig ausgebildet und kann zusammen mit der oder unabhängig von der Dichtungsschicht appliziert werden.

Das zusätzliche Kantenschutzprofil kann aber auch insofern eine Doppelfunktion aufweisen, als es auf der der Verglasungskante gegenüberliegenden Seite als Rauchschutzdichtung ausgebildet ist, insbesondere um neben den Feuerschutzkriterien auch die Rauchschutzanforderungen gemäß DIN 18095 oder DIN EN 1634 Teil 3 zu erfüllen. Der Rauchschutzdichtungsbereich des Kantenschutzprofils kann zum Beispiel eine oder mehrere Dichtungslippe(n) aufweisen oder als elastisches Hohlprofil gestaltet sein.

Insbesondere dann, wenn das Kantenschutzprofil Ränder von Durchdringungen, beispielsweise für Profilzylinder oder Drückergamituren, abdecken soll, ist eine Teilung des U-Profils in zwei L-Profile sinnvoll. Werden sodann zwei endlose Formstücke der beiden L-förmigen Hälften des Kantenschutzprofils ausgeformt, so brauchen diese lediglich von der Oberseite und der Unterseite des Brandschutzglases her im Bereich der betreffenden Ausnehmung eingesetzt werden. Alternativ hierzu ist aber auch das Einsetzen/Einpressen eines einzigen, zusammenhängenden Kantenschutzprofils in einer Durchdringung möglich.

Wenn das Brandschutzglas für eine Brandschutztür Verwendung finden soll, ist es vorteilhaft, ein U-förmiges Kantenschutzprofil zumindest an der dem Fußboden zugewandten Stirnseite der Brandschutztür als schienenförmigen Glasbeschlag aus Metall auszubilden. Die Metallschiene fungiert dann als Verbindungselement zwischen der Brandschutztür und einem ersten Lagerzapfen zum drehbaren Lagern der Brandschutztür in einem unteren Eckverbindungsbereich. Die Verwendung des U-förmigen Kantenschutzprofils als Verbindungselement zu dem ersten Lagerzapfen bzw. einem Türscharnier bietet im Unterschied zu einem verschraubbaren Verbindungselement den Vorteil, dass insbesondere das Brandschutz-Material zwischen den einzelnen Glasscheiben der Brandschutztür nicht auf Druck beansprucht, d.h. möglicherweise herausgequetscht wird. Die Verwendung der Metallschiene hat deshalb den Vorteil, weil sie auch ohne Verklemmung eine stabile Verbindung zu dem Lagerzapfen gewährleistet. Insbesondere bei dem fußbodennahen Lagerzapfen der Brandschutztüre ist dies wichtig, weil die dort auftretenden großen Gewichtskräfte ansonsten lediglich durch Klemmverbindungen mit hoher Klemmkraft kompensiert bzw. aufgenommen werden könnten.

Die Erfindung umfaßt auch die Verwendung eines Silan/Epoxid-Klebe-Dichtstoffs zur Abdichtung der freien Oberflächen des Brandschutz-Materials von Brandschutzgläsern.

### Ausführungsbeispiele

Die Erfindung wird nachfolgend anhand mehrerer Ausführungsbeispiele, die in den Zeichnungen dargestellt sind näher erläutert. Es zeigt:
- Figur 1: eine erste Ausführungsform eines erfindungsgemäßen Brandschutzglases,
- Figur 2: eine zweite Ausführungsform des Brandschutzglases und
- Figur 3: ein Kantenschutzprofil vor der Verklebung mit dem Brandschutzglas und
- Figur 4: eine Anwendung des Brandschutzglases als Brandschutztür.

Für alle Figuren gilt, dass diese nicht maßstäblich gezeichnet sind, sondern dass zum Zwecke einer verbesserten Darstellung die Schichtdicke des Brandschutz-Materials 120 im Verhältnis zur Dicke der Glasscheiben zu groß dargestellt ist. Auch die Dicke einer Dichtungsschicht 130, bestehend aus den anspruchs gemäßen Materialien, ist im Verhältnis sowohl zur Dicke des Brandschutz-Materials 120 als auch im Verhältnis zur Dicke der Glasscheiben nicht maßstäblich eingezeichnet. Die Dicke der Dichtungsschicht 130 mag weniger als einen Millimeter betragen und kann damit wesentlich geringer sein als die Dicke der Brandschutz-Material-Schicht zwischen zwei benachbarten Glasscheiben, die typischerweise im Bereich von etwa 1- 2 mm liegt. Die Dicke der Glasscheiben beträgt typischerweise etwa 2 - 12 mm, beispielsweise etwa 4 mm.

Die Glasscheiben bestehen insbesondere aus Natronkalksilikat-Floatglas. Andere Glaszusammensetzungen wie z.B. Borosilikatgläser, Aluminosilikatgläser oder auch vitrokristalline Gläser (Glaskeramik) sind nicht ausgeschlossen, solange sie für die Anwendung bei transparenten Brandschutzverglasungen in Betracht kommen.

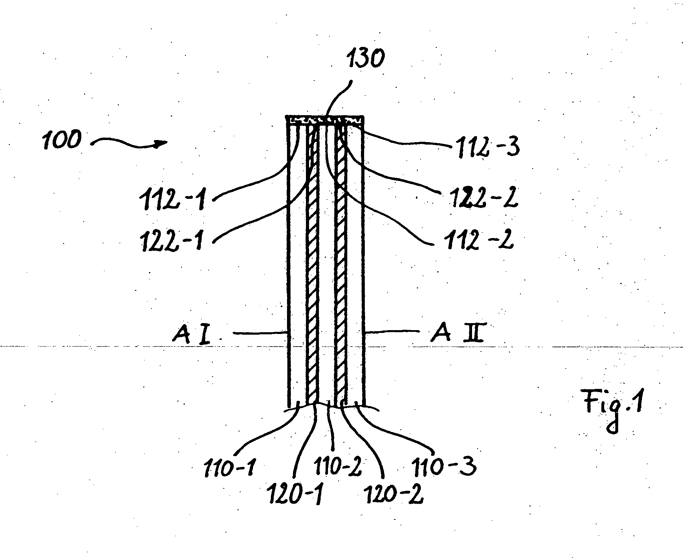

Figur 1 zeigt einen Querschnitt durch ein erfindungsgemäßes Brandschutzglas 100. Es ist aus einer Mehrzahl von parallelen Glasscheiben 110-1, 110-2 und 110-3 mit jeweils zwischen den Glasscheiben eingelagertem Brandschutz-Material 120-1, 120-2 aufgebaut. Je nach den Anforderungen, die an das Brandschutzglas 100 gestellt sind, d.h. zum Beispiel wie lange das Brandschutzglas 100 einer Einwirkung von Feuer standhalten muss, sind die Anzahl und die Dicke der für die Herstellung des Brandschutzglases 100 verwendeten Glasscheiben 110 variabel. Auch kann in an sich bekannter Weise zur Erzielung von Sicherheitseigenschaften oder einer anderen Funktion zumindest eine der Zwischenschichten aus einem anderen Material bestehen, z.B. aus PVB oder EVA. Zur Qualifizierung der Verglasung als Brandschutzglas muss allerdings wenigstens eine der Zwischenschichten ein Brandschutz-Material umfassen. Das Brandschutz-Material umfasst ein Wasserglas, Wasser und andere Zusatzstoffe. Beispiele für derartige Brandschutz-Materialien und typische Aufbauten von Brandschutzgläsern sind z.B. in DE 19 00 054 C3, DE 32 14 852 A1, EP 0 524 418 B1, EP 0 620 781 B1, WO 2004/014813 A1 offenbart.

Die Glasscheiben 110-1, 110-2 und 110-3 sind als solche diffusionsdicht, d.h. sie bieten insbesondere einen idealen Schutz des zwischen ihnen eingelagerten Brandschutz-Materials gegen eindiffundierendes Wasser und Kohlendioxid und gegen einen Verlust des in der Brandschutzschicht gebundenen Wassers. Dies gilt allerdings nur für die Teile der Oberfläche des Brandschutz-Materials, welche direkt in Kontakt mit den Glasscheiben 110 stehen. Neben diesen durch die Glasscheiben abgedeckten Oberflächenbereichen sind an den Rändern des Brandschutzglases 100 zwischen den Schnittflächen 112-1, 112-2, 112-3 dreier benachbarter Glasscheiben 110-1, 110-2 und 110-3 jeweils freie Oberflächen 122-1 und 122-2 des Brandschutz-Materials vorhanden, welche zunächst grundsätzlich nicht geschützt sind.

Zum Schutz dieser freien Oberflächen des Brandschutz-Materials sieht die Erfindung gemäß einer in Figur 1 dargestellten Ausführungsform vor, dass die Dichtungsschicht 130 sich über die gesamte Stirnfläche des Brandschutzglases 100 vorzugsweise in im wesentlichen gleichmäßige Dicke erstreckt. Die Dichtungsschicht 130 überdeckt daher sowohl die Schnittflächen 112-1, 112-2 und 112-3 der Glasscheiben 110-1, 110-2 und 110-3 als auch die dazwischen befindlichen freien Oberflächen 122-1 und 122-2 des Brandschutz-Materials 120-1, 120-2. Dabei besteht eine diffusionsdichte Verbindung zwischen der Dichtungsschicht 130 und den vorgenannten Schnittflächen der Glasscheiben und sind die freien Oberflächen 122-1 und 122-2 des Brandschutz-Materials 120-1, 120-2 vollständig mit der Dichtungsschicht 130 überdeckt. Auf diese Weise wird gewährleistet, dass Wasser bzw. Wasserdampf und Kohlendioxid nicht in die Schichten des Brandschutz-Materials 120-1, 120-2 eindringen können.

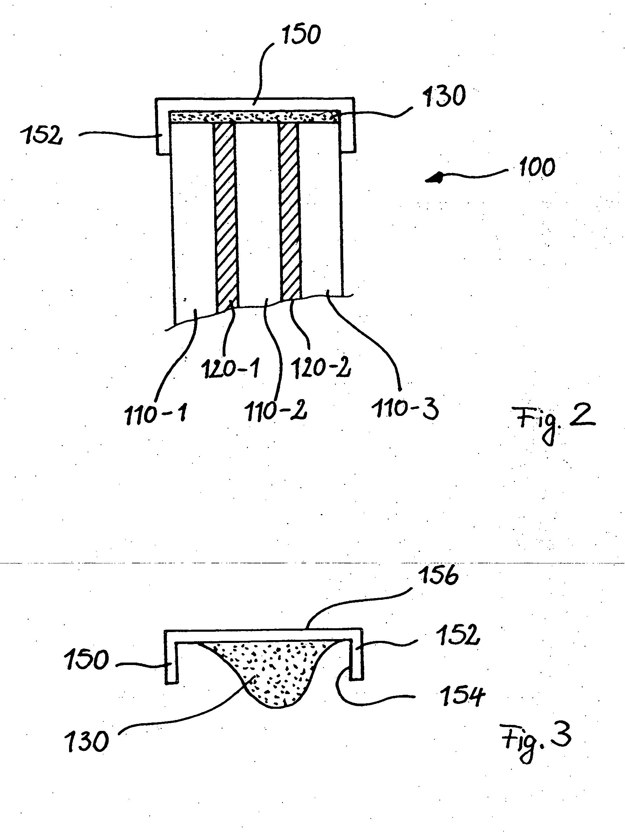

Figur 2 zeigt lediglich beispielhaft eine Variante für das Ausführungsbeispiel gemäß Figur 1. Demnach ist vorgesehen, dass an den Rändern des Brandschutzglases bzw. auch an den Rändern von dessen Durchdringungen, wie sie beispielsweise für Schließzylinder o.ä. vorzusehen sind, umlaufend ein Kantenschutzprofil angebracht ist. Das Kantenschutzprofil 150 dient zum Schutz der Ränder, d.h. insbesondere der Schnittflächen 112-1, 112-2, 112-3 der Glasscheiben 110-1, 110-2, 110-3, sowie der darauf aufgebrachten Dichtungsschicht 130 gegen mechanische Beschädigungen. Zu diesem Zweck sind die Kantenschutzprofile 150 vorzugsweise U-förmig ausgebildet und an allen Rändern umlaufend angebracht. Um das Erscheinungsbild des Brandschutzglases 100 möglichst wenig zu stören, sind die Kantenschutzprofile 150 vorzugsweise zumindest bereichsweise transparent oder durchscheinend, z.B. aus transparentem oder durchscheinendem Silikon, gefertigt. Dabei besitzen die sich parallel zu den Ansichtsseiten des Brandschutzglases 100 erstreckenden Schenkel 152 lediglich eine geringe Länge von ca. 5 bis 10 mm. Das Kantenschutzprofil 150 kann allein aufgrund seiner elastischen Vorspannung fest mit dem umlaufenden Rand des Brandschutzglases 100 verbunden sein. Vorzugsweise wird das Kantenschutzprofil 150 jedoch zu einem Zeitpunkt angebracht, zu dem die Dichtungsschicht 130 noch nicht ausgehärtet ist und somit noch eine Klebkraft zum Kantenschutzprofil 150 entfaltet.

In Figur 3, die einen Querschnitt durch das Kantenschutzprofil 150 zeigt, ist dargestellt, wie die Dichtungsschicht 130 in noch nicht ausgehärtetem Zustand auf das Kantenschutzprofil 150 in Form eines Strangs aufgebracht wird. Der Strang besitzt im Querschnitt die Form eines Berges, dessen Höhepunkt ungefähr mit der Symmetrieebene des Kantenschutzprofils 150 zusammenfällt. Wird ein derartiges mit einem Strang der Dichtungsschicht 130 versehenes Kantenschutzprofil 150 in einer Richtung senkrecht zu dem Mittelsteg 156 auf die Stirnseite des Brandschutzglases 100 aufgedrückt, so kommt es zunächst im Bereich der höchsten Stelle des Strangs zur Berührung mit einem Mittelbereich der Stirnseite des Brandschutzglases 100. Bei fortgesetztem Andrücken des Kantenschutzprofils 150 wird das Material der Dichtungsschicht 130 fortlaufend nach außen verdrängt. Je nach der Menge des aufgebrachten Materials der Dichtungsschicht 130 erstreckt sie diese - wie in Figur 3 gezeigt - lediglich im Bereich der Stirnfläche der Verglasung. Es kann aber durchaus auch möglich bzw. erwünscht sein, dass sich die Dichtungsschicht 130 geringfügig bis in den Bereich der einander zugewandten Innenseiten 154 der Schenkel 152 erstreckt. Dem kann auch durch eine entsprechend längere Ausbildung des Mittelstegs 156 in Bezug auf die Dicke des Brandschutzglases 100 Rechnung getragen werden, um ein Abspreizen der Schenkel 152 zu verhindern.

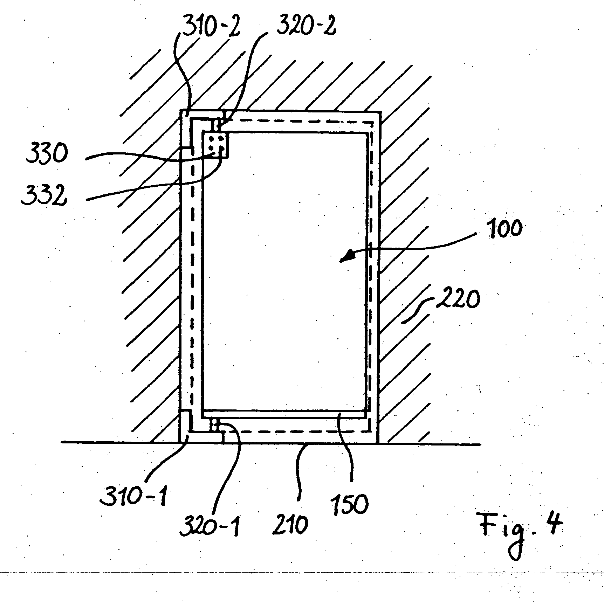

Figur 4 zeigt schließlich noch ein Anwendungsbeispiel für das erfindungsgemäße Brandschutzglas in Form einer Ganzglas-Brandschutztür. Zumindest an der dem Fußboden 210 zugewandten Stirnseite der Brandschutztür 100 ist das U-förmige Kantenschutzprofil 150 als Metallschiene ausgebildet. Die Metallschiene dient als Verbindungselement der Brandschutztür 100 zu einem ersten Lagerzapfen 320-1, welcher die Brandschutztür in einem unteren Eckverbinder 310-1 drehbar lagert. Gegenüberliegend zu dem ersten Verbindungselement weist die Brandschutztür 100 ein zweites Verbindungselement 330 auf, welches zur Aufnahme eines zweiten Lagerzapfens 320-2 zum drehbaren Lagern der Brandschutztür in einem oberen Eckverbinder 310-2 dient. Beide Eckverbinder sind verstärkende Bestandteile einer bekannten und nur gestrichelt eingezeichneten umlaufenden Zarge, die fest mit dem die Türöffnung umgebenden Mauerwerk 220 verbunden ist.

Weil auf das zweite Verbindungselement 330 nur eine im Vergleich zu dem ersten Verbindungselement geringe Gewichtskraft wirkt, d.h. weil diesem Verbindungselement im wesentlichen nur eine Führungsaufgabe zukommt, ist die Belastung des zweiten Verbindungselementes 330 wesentlich geringer als die des ersten Verbindungselementes. Bei dem zweiten Verbindungselement 330 müssen daher die vier den Scheibenverbund in Bohrungen durchdringenden Verbindungsschrauben nur leicht angezogen werden. Insbesondere müssen die Verbindungsschrauben 332 aufgrund der nur geringen Belastung gerade nicht so fest angezogen werden, dass die Gefahr besteht, dass das Brandschutz-Material zwischen den Glasscheiben 110 herausquellen könnte. Das zweite Verbindungselement 330 kann deshalb aus zwei auf gegenüberliegenden Seiten der Brandschutztür angeordneten und gegeneinander verspannten Elementen bestehen. Eine derartige Verbindungstechnik scheidet bei dem ersten Verbindungselement aus, da dort die Belastung zu groß und entsprechend ein Austritt des Brandschutz-Materials aufgrund eines zu hohen Drucks kaum verhindert werden könnte. Die Ausbildung des ersten Verbindungselements als stützende und nicht klemmende Metallschiene ohne Verbindungsschrauben ist deshalb bevorzugt, weil sie keinerlei Kraft senkrecht zur Ebene der Glasscheiben 110 und daher keine Druckkraft auf die Brandschutzschicht ausübt.

Die Dichtungsschicht 130 besteht exemplarisch aus einem 2-Komponenten-Klebe-Dichtstoff mit der folgenden Zusammensetzung:

| **Bestandteil** | **Menge in g je kg Gesamt-Zusammensetzung** | **Anteil in %** |
|---|---|---|
| *in Komponente A:* | | |
| Baycoll XP 2458 *(¹)* | 838,490 | 83,860 |
| Kaneka SAT 10 *(²)* | 93,140 | 9,310 |
| Aerosil® R 812 *(³)* | 30,710 | 3,070 |
| Tinuvin 770 *(⁴)* | 2,230 | 0,223 |
| Irganox 1010 *(⁵)* | 2,640 | 0,264 |
| Dynasylan® VTMO *(⁶)* | 4,050 | 0,405 |
| Dynasylan® DAMO-T *(⁷)* | 20,470 | 2,050 |
| Lupragen N700 *(⁸)* | 7,670 | 0,770 |
| Baysilone Antifoam 100% *(⁹)* | 0,512 | 0,051 |
| **Total, Komp. A** | **999,912** | **100,003** |
| | | |

| *in Komponente B:* | | |
|---|---|---|
| Polypox E 411 *(¹⁰)* | 443,240 | 88,650 |
| Aerosil® R 812 *(³)* | 31,750 | 6,350 |
| Edenor C12 *(¹¹)* | 2,320 | 0,464 |
| Tegokat 225 *(¹²)* | 3,400 | 0,680 |
| Wasser, deion. | 4,640 | 0,928 |
| Baysilone Antifoam 100% *(⁹)* | 0,460 | 0,092 |
| Polypox R 20 *(¹³)* | 2,850 | 0,570 |
| 0.1% Sandoplast Blue 2B *(¹⁴)* in 100g Polypox E 411 | 11,340 | 2,270 |
| **Total, Komp. B** | **500,003** | **100,040** |

| | | |
|---|---|---|
| Zu den verwendeten Bestandteilen: (¹): Silanterminiertes Polyurethan, Viskosität 35 Pa*s (Bayer MaterialScience); (²): kurzkettiger, Silyl-terminierter Polyether (Kaneka Corp.); (³): pyrogene Kieselsäure (Degussa AG); (⁴): UV-Stabilisator (Ciba Speciality Chemicals); Antioxidationsmittel (Ciba Speciality Chemicals); (⁶): Vinyltrimethoxysilane (Degussa); (⁷): N-(2-Aminoethyl)-3-aminopropyltrimethoxysilane (Degussa); (⁸): 1,8-Diazabicyclo-5,4,0-undecen-7 (BASF) | | |

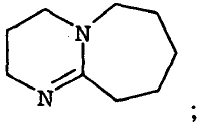

(⁹): Polyether-modifiziertes Methylpolysiloxan (Borchers GmbH);
(¹⁰): niederviskoses, kristallisationsarmes Epoxidharz auf Basis von Bisphenol A (UPPC AG);
(¹¹): Laurinsäure (Cognis);
(¹²): Laurylstannoxan, [(C₄H₉)₂Sn(OOCC₁₁H₂₃)]₂O (Goldschmidt TIB);
(¹³): Epoxid-Verdünner (UPPC AG) 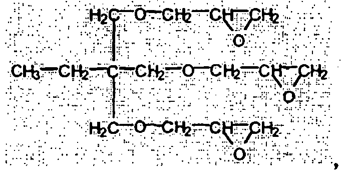 welcher (optional) zur Einstellung der Viskosität und Fliesseigengschaften genutzt werden kann;
(¹⁴): Anthrachinon-Farbstoff (Clariant). Dieser Farbstoff wurde in dem Ausführungsbeispiel beigefügt, um den Farbeindruck an die Tönung einer Standardglaskante anzupassen, ohne allerdings die Transparenz erheblich zu reduzieren. Der Farbstoff kann zur Erzielung einer größtmöglichen Transparenz des Klebstoffs bedarfsweise weggelassen werden.

Insbesondere auch das Aerosil® wurde in vorstehendem Beispiel derart geeignet gewählt, dass eine hohe Lichtdurchlässigkeit sowie Standfestigkeit erzielt werden konnte. Während mit den Aerosilen R 202, R 972 und R 8200 weniger befriedigende Ergebnisse erzielt werden konnten, wurden die vorstehend genannten Zielvorgaben unter Verwendung von Aerosil R 812 besonders gut erfüllt.

Die vorstehenden Komponenten A und B wurden im Verhältnis A : B von 2: 1 zu einem erfindungsgemässen Klebe-Dichtstoff gemischt und ausgehärtet. Mit fachüblichen Routinemassnahmen kann der Klebe-Dichtstoff auch, falls gewünscht, auf ein beliebiges anderes Mischungsverhältnis, beispielsweise im Bereich von A : B = 1 : 1-10 : 1, eingestellt werden. Auch nach 24 Stunden bei 70°C unter Luftzutritt wurde keinerlei Vergilbung oder Trübung des Klebstoffs beobachtet. Die Zusammensetzung weist eine derartige Standfestigkeit auf, dass sie nach der Applikation in einer Auftragsdicke von ca. 1 mm an einer senkrechten Glasfläche aus Standardglas I der HVG-DGG (Hüttentechnische Vereinigung der deutschen Glasindustrie e.V., Deutsche Glastechnische Gesellschaft e.V.) nicht abläuft. Die gewünschte Shore A Härte kann im Rahmen der Erfindung vom Fachmann leicht in Routineversuchen über die Auswahl und die Menge der Katalysatoren, insbesondere des nicht-aromatischen Di- oder Polyamins eingestellt werden. Des weiteren besitzt der vorstehend beschriebene Hybridklebe-Dichtstoff aber auch eine hervorragende Verträglichkeit mit wasserglashaltigem Brandschutz-Material dergestalt, dass eine langfristig stabile Versiegelung der freien Oberflächen des Brandschutz-Materials bei einer Beschichtung derselben und gleichzeitiger Beschichtung der angrenzenden Stirnseiten der Brandschutzglasscheiben erzielt wird.

Im folgenden wird ein weiteres Ausführungsbeispiel beschrieben:
Ein Brandschutzglas, bestehend aus vier Scheiben Natronkalksilikat-Floatglas von jeweils 2,6 mm Dicke und drei dazwischen liegenden Schichten aus Brandschutz-Material von jeweils 1,4 mm Dicke, wurde wie folgt hergestellt:
   Übereinanderschichten der Glasscheiben und des Brandschutz-Materials, so dass zwischen den Schnittflächen zweier benachbarter Glasscheiben freie Oberflächen des Brandschutz-Materials entstanden, die nicht durch eine der Glasscheiben abgedeckt waren.

Bei dem für das Ausführungsbeispiel verwendeten Brandschutz-Material handelte es sich um auf Natronwasserglas basierende Schichten mit Restwassergehalten - nach Trocknung das Brandschutz-Materials und Zusammenfügen der damit beschichteten Glasscheiben des Brandschutzglases - von ca. 25 Gew.%. Es könnten auch Brandschutz-Materialien aus anderen Alkalisilikaten oder deren Mischungen verwendet werden. Ebenso ist die Zugabe von Weichmachern (z.B. Zucker oder höhere Alkohole) oder Gelbildnem möglich oder kann das Brandschutz-Material mit einem Gießverfahren zwischen die Glasscheiben eingebracht werden.

Das Brandschutzglas wurde in horizontaler Position so unterstützt, dass ein etwa 2 cm breiter Randbereich frei zugänglich war, insbesondere auf einem Drehtisch.

Die zuvor beschriebene Rezeptur des Klebe-Dichtstoffes wurde als Zweikomponenten-System aus einer Doppelkartusche verwendet, wobei die Einzelkomponenten in der Doppelkartusche im Verhältnis A : B = 2 : 1 vorlagen. An die Doppelkartusche war ein Statikmischer angesetzt, um die intensive, blasenfreie Durchmischung beider Komponenten zu gewährleisten.

Die Spitze des Statikmischers wurde an einer ersten der zuvor mittels Ethanol oder einem anderen geeigneten Mittel gereinigten Stirnseiten des Brandschutzglases angesetzt. Durch Betätigung einer geeigneten Auspressvorrichtung wurde der Klebe-Dichtstoff gemischt und als etwa 2 mm dicker Streifen auf die erste Stirnseite des Brandschutzglases aufgetragen. Der Klebe-Dichtstoff haftete an der Stirnseite des Brandschutzglases, ohne abzulaufen oder zu tropfen. Bedingt durch seine hohe Obeflächenspannung bildete der Klebe-Dichtstoff eine gleichmäßige dicke Schicht. Nach Drehen des Brandschutzglases um jeweils 90° wurde der Vorgang an den drei weiteren Stirnseiten fortgesetzt. Die Eckbereiche und gegebenenfalls auftretende Ungleichmäßigkeiten beim Auftrag wurden mit einem Spachtel nachgearbeitet.

Die Topfzeit betrug etwa 10 min und die Aushärtung benötigte etwa 24 h.

Nachdem die Aushärtung des Klebe-Dichtstoffes abgeschlossen war, bildet dieser eine gummielastische, hoch transparente und nahezu farblose Schicht auf den Stirnseiten des Brandschutzglases.

Der erfindungsgemäß verwendete Klebe-Dichtstoff kann insbesondere wasserglashältiges Brandschutz-Material von Brandschutzgläsern dauerhaft vor unmittelbarem Kontakt zu Wasser aus der Umgebung schützen.

Zum Nachweis wurde ein erfindungsgemäß umlaufend abgedichtetes Brandschutzglas des zuvor beschriebenen Aufbaus bei Raumtemperatur in ein Wasserbad gegeben, so dass es vollständig von Wasser bedeckt war. Selbst nach vierwöchiger Lagerzeit im Wasser zeigten sich weder Veränderungen am Klebe-Dichtstoff, noch wurde das Brandschutz-Material angelöst oder zerstört.

Im Vergleich hierzu trat bei einem nicht erfindungsgemäß abgedichteten Brandschutzglas schon nach einstündiger Lagerzeit im Wasser eine Auflösung des Brandschutz-Materials bis zu einer mehrere Zentimeter zwischen die Glasscheiben reichenden Tiefe auf.

## Patentansprüche

1. Brandschutzglas (100) umfassend eine Mehrzahl von parallel zueinander angeordneten Glasscheiben (110-1, 110-2, 110-3) mit zwischen benachbarten Glasscheiben eingelagertem Brandschutz-Material (120-1, 120-2) und mit einer Dichtungsschicht (130) zum Abdichten der freien Oberflächen (122-1, 122-2) des Brandschutz-Materials (120-1, 120-2), welche im Bereich von Stirnflächen des Brandschutzglases (100) ausgebildet ist, **dadurch gekennzeichnet, dass** die Dichtungsschicht (130) im wesentlichen ausschließlich im Bereich der Stirnflächen des Brandschutzglases (100) ausgebildet ist und aus einem Silan/Epoxid-Klebe-Dichtstoff besteht, wobei das Brandschutz-Material umfasst ein Wasserglas, Wasser und andere Zusatzstoffe.

2. Brandschutzglas (100) nach Anspruch 1, **dadurch gekennzeichnet, dass** der Klebe-Dichtstoff ein Silanharz und ein Epoxidharz enthält und weiter
a) mindestens ein nicht-aromatisches, tertiäres Di- oder Polyamin, insbesondere ausgewählt aus der Gruppe bestehend aus aliphatischen Aminen, cycloaliphatischen Aminen, Amido-Aminen, sowie Mischungen davon; und
b) mindestens einen Silan-Katalysator, welcher keine Amin-Verbindung ist, insbesondere eine Organometall-Verbindung, vorzugsweise ausgewählt aus der Gruppe bestehend aus Organozinn-Verbindungen; Organozirkonat-Verbindungen, brganotitanat-Verbindungen, sowie Mischungen davon;
enthält.

3. Brandschutzglas (100) nach Anspruch 1 oder 2, **dadurch gekennzeichnet, dass** der Klebe-Dichtstoff als Füllstoff eine hydrophobe, insbesondere mit Hexamethyldisilazan modifizierte, pyrogene Kieselsäure enthält, welche eine spezifische Oberfläche von ≥ 160 m²/g, vorzugsweise von ≥ 200 m²/g, besonders bevorzugt von ≥ 240 m²/g aufweist.

4. Brandschutzglas (100) nach einem der Ansprüche 1 bis 3, **dadurch gekennzeichnet, dass** der Klebe-Dichtstoff derart standfest ist, dass er nach der Applikation in einer Auftragsdicke von 1 mm, vorzugsweise von 2 mm, besonders bevorzugt von 3 mm an einer senkrechten Glasfläche aus Standardglas I der HVG-DGG (Hüttentechnische Vereinigung der deutschen Glasindustrie e.V., Deutsche Glastechnische Gesellschaft e.V.) nicht abläuft.

5. Brandschutzglas (100) nach einem der Ansprüche 1 bis 4, **dadurch gekennzeichnet, dass** der Klebe-Dichtstoff nach einer Lagerung während 24 Stunden unter Luftzutritt bei 70°C keine signifikante Verfärbung und/oder Trübung aufweist.

6. Brandschutzglas (100) nach einem der Ansprüche 1 bis 5, **dadurch gekennzeichnet, dass** der Klebe-Dichtstoff im ausgehärteten Zustand eine Shore A Härte von ≥ 60, vorzugsweise von ≥ 65, besonders bevorzugt von ≥ 70 aufweist.

7. Brandschutzglas (100) nach einem der Ansprüche 2 bis 6 **dadurch gekennzeichnet, dass** als Bestandteil a) des Klebe-Dichtstoffs ein nicht-aromatisches Di- oder Polyamin eingesetzt ist, ausgewählt aus der Gruppe bestehend aus DABCO (1,4-diazabicyclo[2.2.2]octane), DBU (1,8-Diazabicyclo[5.4.0]undec-7-ene), DBN (1,5-Diazabicyclo[4.3.0]non-5-ene), 7-Methyl-1,5,7-triazabicyclo[4.4.0]dec-5-ene, 1,2,2,6,6-Pentamethylpiperidine, N,N-Diisopropyl-3-pentylamine, N-Ethyldiisopropylamine, 2-tert-Butyl-1,1,3,3-tetramethylguanidine, N,N'-Dimethylpiperazine, 1,8-Diazabicyclo-5,4,0-undecen-7, sowie Mischungen davon.

8. Brandschutzglas (100) nach Anspruch 7, **dadurch gekennzeichnet, dass** als Bestandteil a) 1,8-Diazabicyclo-5,4,0-undecen-7, 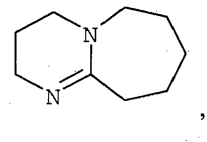 eingesetzt ist.

9. Brandschutzglas (100) nach einem der Ansprüche 2 bis 8 , **dadurch gekennzeichnet, dass** als Bestandteil b) eine Organozinnverbindung eingesetzt ist, ausgewählt aus der Gruppe bestehend aus Dioctylzinndi(2-ethylhexanoat)Lösung, Dioctylzinndilaurat, Dioctylzinnoxid, Dibutylzinndilaurat, Dibutylzinndicarbokylat, Butylzinntris-(2-ethylhexanoat), Dibutylzinndineodecanoat, Laurylstannoxan, Dibutylzinndiketanoat, Dioctylzinnoxid, Dibutylzinndiacetat, Dibutylzinnmaleat, Dibutylzinndichlorid, Dibutylzinnsulfid, Dibutylzinnoxid, Butylzinndihydroxychlorid, Butylzinnoxid, Dibutylzinn(dioctylmaleinat), Tetrabutylzinn, Zinkricinoleat, Zinkoctoat, Zinkacetylacetonat, Zinkoxalat, sowie Mischungen davon.

10. Brandschutzglas (100) nach Anspruch 9, **dadurch gekennzeichnet, dass** als Bestandteil b) Laurylstannoxan, [(C₄H₉)₂Sn(OOCC₁₁H₂₃)]₂O, eingesetzt ist.

11. Brandschutzglas (100) nach einem der Ansprüche 1 bis 10, **dadurch gekennzeichnet, dass** der Klebe-Dichtstoff als Silanharz ein silanterminiertes Polyurethan oder Reaktanten, die zur Bildung eines silanterminierten Polyurethans befähigt sind, enthält.

12. Brandschutzglas (100) nach einem der Ansprüche 1 bis 11, **dadurch gekennzeichnet, dass** es sich bei dem Klebe-Dichtstoff um einen 1- oder 2-Komponenten Klebstoff handelt.

13. Brandschutzglas (100) nach Anspruch 12, **dadurch gekennzeichnet, dass** es sich um einen 2-Komponenten-Klebstoff handelt, bei welchem das nicht-aromatische, tertiäre Polyamin und der Silan-Katalysator in getrennten Komponenten vorliegen.

14. Brandschutzglas (100) nach einem der Ansprüche 1 bis 13, **dadurch gekennzeichnet, dass** der Klebe-Dichtstoff im ausgehärteten Zustand eine Zugfestigkeit gemäss DIN 53455 (Aluminium) von ≥ 7 MPa, bevorzugt von ≥ 8 MPa, besonders bevorzugt von ≥ 9 MPä aufweist.

15. Brandschutzglas (100) nach einem der Ansprüche 1 bis 14, **dadurch gekennzeichnet, dass** der Klebe-Dichtstoff im ausgehärteten Zustand bei einer Schichtdicke von 1 mm, hinterlegt mit einem BaSO₄-Hintergrund, eine Lichtdurchlässigkeit (Transparenz oder Transluzenz) im sichtbaren Bereich von ≥ 30%, vorzugsweise von ≥ 40%, besonders bevorzugt von ≥ 50% aufweist.

16. Brandschutzglas (100) nach einem der Ansprüche 1 bis 15, **dadurch gekennzeichnet, dass** der Klebe-Dichtstoff ein Kunststoff mit erhöhtem Dampfdurchlasswiderstand und gutem Anhaftvermögen an Glas, vorzugsweise ein silanterminiertes Polymer ist, wobei der Klebe-Dichtstoff weiter vorzugsweise ein Zweikomponenten-Klebe-Dichtstoff ist, dessen eine Komponente aus einem silanterminierten Polymer und dessen andere Komponente aus einem Epoxidharz besteht, wobei die beiden Komponenten im Gewichtsverhältnis zwischen 1:1 und 10:1, vorzugsweise 2:1, gemischt werden.

17. Brandschutzglas (100) nach einem der Ansprüche 1 bis 16, **dadurch gekennzeichnet, dass** die Dichtungsschicht (140-1, 140-2) auf die freien Oberflächen des Brandschutz-Materials im Bereich von Durchdringungen des Brandschutzglases (100) aufgebracht ist.

18. Brandschutzglas (100) nach einem der Ansprüche 1 bis 17, **gekennzeichnet durch** ein die Ränder des Brandschutzglases (100) und/oder die Ränder von dessen Durchdringungen zumindest bereichsweise umfassendes zusätzliches Kantenschutzprofil (150).

19. Brandschutzglas (100) nach Anspruch 18, **dadurch gekennzeichnet, dass** das Kantenschutzprofil als Rauchschutzdichtung ausgebildet ist.

20. Brandschutzglas (100) nach Anspruch 18 oder 19, **dadurch gekennzeichnet, dass** das im Querschnitt U-förmige Kantenschutzprofil (150) aus zwei im Querschnitt L-formigen Profilhälften zusammengesetzt ist.

21. Brandschutzglas (100) nach Anspruch 20, **dadurch gekennzeichnet, dass** das Kantenschutzprofil (150) als ein in Längsrichtung endloses Formstück zum Einsetzen in eine Durchdringung in dem Brandschutzglas (100) ausgebildet ist.

22. Bandschutzglas (100) nach einem der Ansprüche 18 bis 21, **dadurch gekennzeichnet, dass** das Kantenschutzprofil (150) aus einem transparenten oder durchscheinenden Kunststoff, insbesondere aus einem transparenten oder durchscheinenden Silikonelastomer, gebildet ist.

23. Brandschutzglas (100) nach einem der Ansprüche 20 bis 22, **dadurch gekennzeichnet, dass** das Brandschutzglas (100) als Brandschutztür und das U-förmige Schutzprofil (150) zumindest an der einem Fußboden (210) zugewandten Stirnseite der Brandschutztür als Metallschiene ausgebildet ist, wobei die Metallschiene als Verbindungselement zwischen der Brandschutztür und einem ersten Lager (320-1) zum drehbaren Lagern der Brandschutztür (100) in einem unteren Eckverbinder (310-1) fungiert.

24. Brandschutzglas (100) nach Anspruch 23, **dadurch gekennzeichnet, dass** die Brandschutztür (100) ein mit ihr verschraubbares zweites Verbindungselement (330) aufweist, welches mit einem zweiten Lager (320-2) zum drehbaren Lagern der Brandschutztür (100) in einem oberen Eckverbinder (310-2) verbunden ist.

25. Verfahren zum Herstellen eines Brandschutzglases (100) umfassend die Schritte:
Übereinanderschichten einer Mehrzahl von Glasscheiben (110-1, 110-2, 110-3) und Einlagern von Brandschutz-Material (120-1, 120-2 zwischen den Glasscheiben (110-1, 110-2, 110-3), so dass zwischen den Schnittflächen (112-1, 112-2, 112-3) zweier benachbarter Glasscheiben freie Oberflächen (122-1, 122-2) des Brandschutz-Materials entstehen, die nicht durch eine der Glasscheiben abgedeckt sind, und Vorsehen einer Dichtungsschicht (130) zum Abdichten der freien Oberflächen des Brandschutz-Materials (120-1, 120-2), **dadurch gekennzeichnet, dass** die Dichtungsschicht durch Aufbringen einer Dichtungsschicht im wesentlichen ausschließlich im Bereich der Stirnflächen des Brandschutzglases (100) erfolgt, wobei die Dichtungsschicht aus einem Silan/Epoxid-Kiebe-Dichtstoff besteht, wobei das Brandschutz-Material umfasst ein Wasserglas, Wasser und andere Zusatzstoffe.

26. Verfahren nach Anspruch 25, **dadurch gekennzeichnet, dass** der Silan/Epoxid-Klebe-Dichtstoff gemäß einem der Ansprüche 2 - 24 ausgewählt wird:

27. Verwendung eines Silan/Epoxid-Klebe-Dichtstoffs zur Abdichtung der freien Oberflächen des Brandschutz-Materials von Brandschutzgläsern, wobei das Brandschutz-Material umfasst ein Wasserglas, Wasser und andere Zusatzstoffe.

## Claims

1. Fire resistant glass (100) comprising a plurality of glass panes (110-1, 110-2, 110-3) which are arranged parallel to each other with a fire resistant material (120-1, 120-2) inserted between adjacent glass panes and with a sealing layer (130) for sealing the free surfaces (122-1, 122-2) of the fire resistant material (120-1, 120-2), which are formed in the region of the end surfaces of the fire resistant glass (100), **characterized in that** the sealing layer (130) is formed substantially exclusively in the region of the end surfaces and consists of a silane/epoxy adhesive sealant, wherein the fire resistant material comprises a water-glass, water and other additives.

2. Fire resistant glass (100) according to claim 1, **characterized in that** the adhesive sealant contains a silane resin and an epoxy resin and furthermore contains
a) at least one non-aromatic, tertiary diamine or polyamine, particularly selected from the group consisting of aliphatic amines, cycloaliphatic amines, amidoamines and mixtures thereof; and
b) at least one silane catalyst, which is not an amine compound, which is particularly an organometallic compound, preferably selected from the group consisting of organotin compounds, organozirconate compounds, organotitanate compounds and mixtures thereof.

3. Fire resistant glass (100) according to claim 1 or 2, **characterized in that** the adhesive sealant contains as a filling material a hydrophobic, especially hexamethyldisilazane modified pyrogenic silica having a specific surface area of ≥ 160 m²/g, preferably of ≥ 200 m²/g, especially preferred of ≥ 240 m²/g.

4. Fire resistant glass (100) according to any of claims 1 to 3, **characterized in that** the adhesive sealant is stable to such an extent that it does not drain off after having been applied to a vertical glass surface of "Standardglas I" of HVG-DGG (Hüttentechnische Vereinigung der deutschen Glasindustrie e.V., Deutsche Glastechnische Gesellschaft e.V.) in an application thickness of 1 mm, preferably 2 mm, more preferably 3 mm.

5. Fire resistant glass (100) according to any of claims 1 to 4, **characterized in that** the adhesive sealant, after having been stored for 24 h at 70 °C with access of air, does not show a significant discoloration and/or hazing.

6. Fire resistant glass (100) according to any of claims 1 to 5, **characterized in that** the adhesive sealant has a Shore hardness Type A of ≥ 60, preferably of ≥ 65, especially preferred of ≥ 70 in the hardened state.

7. Fire resistant glass (100) according to any of claims 2 to 6, **characterized in that** a non-aromatic diamine or polyamine is used as the component a) of the adhesive sealing material which is selected from the group consisting of DABCO (1,4-diazabicyclo-[2.2.2]octane), DBU (1,8-diazabicyclo[5.4.0]undec-7-ene), DBN (1,5-diazabicyclo[4.3.0]non-5-ene), 7-methyl-1,5,7-triazabicyclo[4.4.0]dec-5-ene, 1,2,2,6,6-pentamethylpiperidine, N,N-diisopropyl-3-pentylamine, N-ethyldiisopropylamine, 2-tert-butyl-1,1,3,3-tetramethylguanidine, N,N'-dimethylpiperazine, 1,8-diazabicyclo-5,4,0-undecene-7 and mixtures thereof.

8. Fire resistant glass (100) according to claim 7, **characterized in that** 1,8-diazabicyclo-5,4,0-undecene-7 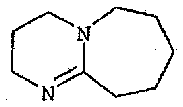 is used as component a).

9. Fire resistant glass (100) according to any of claims 2 to 8, **characterized in that** an organotin compound is used as a component b) which is selected from the group consist of dioctyltin di(-ethylhexanoate) as a solution, dioctyltin dilaurate, dioctyltin oxide, dibutyltin dilaurate, dibutyltin dicarboxylate, butyltin tris-(2-ethylhexanoate), dibutyltin dineodecanoate, lauryl stannoxane, dibutyltin diketonate, dioctyltin oxide, dibutyltin diacetate, dibutyltin maleate, dibutyltin dichloride, dibutyltin sulfide, dibutyltin oxide, butyltin dihydroxychloride, butyltin oxide, dibutyltin dioctylmaleinate, tetrabutyltin, zinc ricinoleate, zinc octoate, zinc acetylacetonate, zinc oxalate and mixtures thereof.

10. Fire resistant glass (100) according to claim 9, **characterized in that** lauryl stannoxane [(C₄H₉)Sn(OOCC₁₁H₂₃)]₂O is used as component b).

11. Fire resistant glass (100) according to any of claims 1 to 10, **characterized in that** the adhesive sealant comprises, as the silane resin, a silane terminated polyurethane or reactants which are capable of forming a silane terminated polyurethane.

12. Fire resistant glass (100) according to any of claims 1 to 11, **characterized in that** the adhesive sealant is a 1 component adhesive or a 2 component adhesive.

13. Fire resistant glass (100) according to claim 12, **characterized in that** the adhesive sealant is a 2 component adhesive, in which the non-aromatic tertiary polyamine and the silane catalyst are provided in separate components.

14. Fire resistant glass (100) according to any of claims 1 to 13, **characterized in that** the adhesive sealant in the hardened state has a tensile strength according to DIN 53455 (aluminum) of ≥ 7 MPa, preferably of ≥ 8 MPa, especially preferred of ≥ 9 MPa.

15. Fire resistant glass (100) according to any of claims 1 to 14, **characterized in that** the adhesive sealant in the hardened state for a layer thickness of 1 mm and deposited on a BaSO₄ background has a light transmission (transparency or translucency) in the visible region of ≥ 30 %, preferably of ≥ 40 %, especially preferred of ≥ 50 %.

16. Fire resistant glass (100) according to any of claims 1 to 15, **characterized in that** the adhesive sealant is a plastic with an increased vapor transmission resistance and a good adhesion performance on glass, preferably a silane terminated polymer, wherein, furthermore, the adhesive sealant is preferably a two component adhesive sealant, one component thereof consisting of a silane terminated polymer and the other component thereof consisting of an epoxy resin, wherein the two components are mixed in a weight ratio in the range from 1:1 to 10:1, preferably 2:1.

17. Fire resistant glass (100) according to any of claims 1 to 16, **characterized in that** the sealing layer (140-1, 140-2) is applied to the free surfaces of the fire resistant material in the region of openings in the fire resistant glass (100).

18. Fire resistant glass (100) according to any of claims 1 to 17, **characterized by** an additional edge protection profile (150) comprising at least in one or several parts the edges of the fire resistant glass (100) und/or the edges of the openings.

19. Fire resistant glass according to claim 18, **characterized in that** the edge protection profile is shaped as a smoke protection sealing.

20. Fire resistant glass (100) according to claim 18 or 19, **characterized in that** the edge protection profile, which is U-shaped in the cross-section, is composed of two profile halves which are L-shaped in the cross-section.

21. Fire resistant glass (100) according to claim 20, **characterized in that** the edge protection profile (150) is formed as a shaped piece which is endless in longitudinal direction for being inserted into an opening in the fire resistant glass (100).

22. Fire resistant glass (100) according to any of claims 18 to 21, **characterized in that** the edge protection profile (150) is made of a transparent or translucent plastic material, especially a transparent or translucent silicone elastomer.

23. Fire resistant glass (100) according to any of claims 20 to 22, **characterized in that** the fire resistant glass (100) is shaped as a fire resistant door, and the U-shaped protection profile (150) is formed as a metal rail at least on the front side of the fire resistant door facing a floor, wherein the metal rail functions as a connecting element between the fire resistant door and a first bearing (320-1) for rotatably bearing the fire resistant door (100) in a lower corner connection (310-1).

24. Fire resistant glass (100) according to claim 23, **characterized in that** the fire resistant door (100) has a second connecting element (330) screwable with the fire resistant door (100), wherein the connecting element (330) is bonded to a second bearing (320-2) for rotatably bearing the fire resistant door (100) in an upper corner connection (310-2).

25. Method for producing a fire resistant glass (100) comprising the steps of: superimposing a plurality of glass panes (110-1, 110-2, 110-3) and inserting a fire resistant material (120-1, 120-2) between the glass panes (110-1, 110-2, 110-3), such that between the intersections (112-1, 112-2, 112-3) of two adjacent glass panes free surfaces (122-1, 122-2) of the fire resistant material are formed, which are not covered by one of the glass panes, and providing a sealing layer (130) for sealing the free surface of the fire resistant material (120-1, 120-2), **characterized in that** the sealing layer is formed by applying a sealing layer substantially exclusively in the region of the end surfaces of the fire resistant glass (100), wherein the sealing layer consists of a silane/epoxy adhesive sealant, wherein the fire resistant material comprises a water-glass, water and further additives.

26. Method according to claim 25, **characterized in that** the silane/epoxy adhesive sealant according to any of claims 2 - 24 is selected.

27. Use of a silane/epoxy adhesive sealing material for sealing the free surfaces of the fire resistant material of fire resistant glasses, wherein the fire resistant material comprises a water-glass, water and further additives.

## Revendications

1. Verre ignifuge (100) comprenant plusieurs plaques de verre (110-1, 110-2, 110-3) disposées parallèlement les unes par rapport aux autres avec entre des plaques de verre voisines un matériau ignifuge (120-1, 120-2) inséré et avec une couche d'étanchéité (130) pour étanchéifier les surfaces libres (122-1, 122-2) du matériau ignifuge (120-1, 120-2), laquelle est formée dans le domaine de surfaces frontales du verre ignifuge (100), **caractérisé en ce que** la couche d'étanchéité (130) est formée essentiellement exclusivement dans le domaine des surfaces frontales du verre ignifuge (100) et est constituée d'un adhésif-matériau d'étanchéité de silane/époxyde, le matériau ignifuge comprenant un verre soluble, de l'eau et d'autres additifs.

2. Verre ignifuge (100) selon la revendication 1, **caractérisé en ce que** l'adhésif-matériau d'étanchéité contient une résine de silane et une résine époxyde et contient de plus
a) au moins une di- ou polyamine tertiaire non-aromatique, particulièrement choisie dans le groupe constitué d'amines aliphatiques, d'amines cycloaliphatiques, d'amido-amines, ainsi que de mélanges de ceux-ci ; et
b) au moins un catalyseur de silane, lequel n'est pas un composé d'amine, en particulier un composé organo-métallique, de préférence choisi dans le groupe constitué de composés d'organo-étain, de composés d'organo-zirconate, de composés d'organo-titanate, ainsi que de mélanges de ceux-ci.

3. Verre ignifuge (100) selon la revendication 1 ou 2, **caractérisé en ce que** l'adhésif-matériau d'étanchéité contient comme charge un acide silicique hydrophobe, en particulier modifié avec de l'hexaméthyldisilazane, pyrogène, lequel présente une surface spécifique ≥ 160 m²/g, de préférence ≥ 200 m²/g, encore mieux ≥ 240 m²/g.

4. Verre ignifuge (100) selon l'une quelconque des revendications 1 à 3, **caractérisé en ce que** l'adhésif-matériau d'étanchéité est stable de sorte qu'après l'application dans une épaisseur d'application de 1 mm, de préférence de 2 mm, encore mieux de 3 mm sur une surface de verre perpendiculaire constituée de verre standard I de HVG-DGG (Hüttentechnische Vereinigung der deutschen Glasindustrie e. V., Deutsche Glastechnische Gesellschaft e. V.), il ne s'écoule pas.

5. Verre ignifuge (100) selon l'une quelconque des revendications 1 à 4, **caractérisé en ce que** l'adhésif-matériau d'étanchéité ne présente aucune coloration et/ou turbidité significative après un stockage pendant 24 heures sous entrée d'air à 70°C.

6. Verre ignifuge (100) selon l'une quelconque des revendications 1 à 5, **caractérisé en ce que** l'adhésif-matériau d'étanchéité présente à l'état durci une dureté Shore A ≥ 60, de préférence ≥ 65, encore mieux ≥ 70.

7. Verre ignifuge (100) selon l'une quelconque des revendications 2 à 6, **caractérisé en ce que** l'on utilise comme constituant a) de l'adhésif-matériau d'étanchéité une di- ou poly-amine non aromatique, choisie dans le groupe constitué de DABCO (1,4-diazabicyclo[2.2.2]octane), DBU (1,8-diazabicyclo[5.4.0]undec-7-ène), DBN (1,5-diazabicyclo[4.3.0]non-5-ène), 7-méthyl-1,5,7-triazabicyclo-[4.4.0]dec-5-ène, 1,2,2,6,6-pentaméthylpipéridine, la N,N-diisopropyl-3-pentylamine, N-éthyldiisopropylamine, 2-tert-butyl-1,1,3,3-tétraméthyl-guanidine, N,N'-diméthylpipérazine, 1,8-diazabicyclo-5,4,0-undécène-7, ainsi que de mélanges de ceux-ci.

8. Verre ignifuge (100) selon la revendication 7, **caractérisé en ce que** l'on utilise comme constituant a) le 1,8-diazabicyclo-5,4,0-undécène-7,

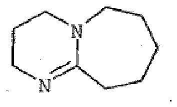

9. Verre ignifuge (100) selon l'une quelconque des revendications 2 à 8, **caractérisé en ce que** l'on utilise comme constituant b) un composé d'organo-étain, choisi dans le groupe constitué d'une solution de di(2-éthylhexanoate) de dioctylétain, dilaurate de dioctylétain, oxyde de dioctylétain, dilaurate de dibutylétain, dicarboxylate de dibutylétain, tris-(2-éthylhexanoate) de butylétain, dinéodécanoate de dibutylétain, laurylstannoxane, dicétanoate de dibutylétain, oxyde de dibutylétain, diacétate de dibutylétain, maléate de dibutylétain, dichlorure de dibutylétain, sulfure de dibutylétain, oxyde de dibutylétain, hydroxychlorure de butylétain, oxyde de butylétain, (dioctylmaléinate) de dibutylétain, tétrabutylétain, ricinoléate de zinc, octoate de zinc, acétylacétonate de zinc, oxalate de zinc, ainsi que de mélanges de ceux-ci.

10. Verre ignifuge (100) selon la revendication 9, **caractérisé en ce que** l'on utilise comme constituant b) du laurylstannoxane, [(C₄H₉)₂Sn(OOCC₁₁H₂₃)]₂O.

11. Verre ignifuge (100) selon l'une quelconque des revendications 1 à 10, **caractérisé en ce que** l'adhésif-matériau d'étanchéité contient comme résine de silane un polyuréthane à terminaison silane ou des corps réagissants qui sont capables de former un polyuréthane à terminaison silane.

12. Verre ignifuge (100) selon l'une quelconque des revendications 1 à 11, **caractérisé en ce qu'**il s'agit pour l'adhésif-matériau d'étanchéité d'un adhésif à 1 ou 2 constituants.

13. Verre ignifuge (100) selon la revendication 12, **caractérisé en ce qu'**il s'agit d'un adhésif à deux constituants, pour lequel la polyamine tertiaire non aromatique et le catalyseur de silane sont présents en tant que constituants séparés.

14. Verre ignifuge (100) selon l'une quelconque des revendications 1 à 13, **caractérisé en ce que** l'adhésif-matériau d'étanchéité présente dans un état durci une résistance à la traction selon DIN 53455 (Aluminium) ≥ 7 MPa, de préférence ≥ 8 MPa, encore mieux ≥ 9 MPa.

15. Verre ignifuge (100) selon l'une quelconque des revendications 1 à 14, **caractérisé en ce que** l'adhésif-matériau d'étanchéité à l'état durci pour une épaisseur de couche de 1 mm, est doublé avec une base de doublure de BaSO₄, présente un coefficient de transmission de lumière (transparence ou translucidité) dans le domaine visible ≥ 30 %, de préférence ≥ 40 %, encore mieux ≥ 50 %.

16. Verre ignifuge (100) selon l'une quelconque des revendications 1 à 15, **caractérisé en ce que** l'adhésif-matériau d'étanchéité est une matière plastique avec une résistance élevée au passage de la vapeur d'eau et une bonne aptitude à l'adhérence sur du verre, de préférence un polymère à terminaison silane, l'adhésif-matériau d'étanchéité étant de plus de préférence un adhésif-matériau d'étanchéité à deux constituants, dont un constituant est constitué d'un polymère à terminaison silane et dont l'autre constituant est constitué d'une résine époxyde, les deux constituants étant mélangés dans un rapport massique compris entre 1:1 et 10:1, de préférence 2:1.

17. Verre ignifuge (100) selon l'une quelconque des revendications 1 à 16, **caractérisé en ce que** la couche d'étanchéité (140-1, 140-2) est appliquée sur les surfaces libres du matériau ignifuge dans un domaine de pénétrations du verre ignifuge (100).

18. Verre ignifuge (100) selon l'une quelconque des revendications 1 à 17, **caractérisé par** un profil de protège-arrête périphérique (150) comprenant au moins partiellement les bords du verre ignifuge (100) et/ou les bords de ses pénétrations.

19. Verre ignifuge (100) selon la revendication 18, **caractérisé en ce que** le profil de protège-arête est formé comme une étanchéité à la fumée.

20. Verre ignifuge (100) selon la revendication 18 ou 19, **caractérisé en ce que** le profil de protège-arête (150) en forme de U dans la section transversale est constitué de deux moitiés de profils de forme L dans la section transversale.

21. Verre ignifuge (100) selon la revendication 20, **caractérisé en ce que** le profil de protège-arête (150) est formé comme une pièce façonnée continue dans la direction longitudinale pour une utilisation dans une pénétration dans le verre ignifuge (100).

22. Verre ignifuge (100) selon l'une quelconque des revendications 18 à 21, **caractérisé en ce que** le profil de protège-arête (150) est formé d'une matière plastique transparente ou translucide, en particulier d'un élastomère de silicone transparent ou translucide.

23. Verre ignifuge (100) selon l'une quelconque des revendications 20 à 22, **caractérisé en ce que** le verre ignifuge (100) est formé comme une porte coupe-feu et que le profil de protection en forme de U (150) est formé au moins sur le côté frontal de la porte coupe-feu associé à un sol (210) comme un rail métallique, le rail métallique étant fondu comme un élément de jonction entre la porte coupe-feu et un premier palier (320-1) pour un montage rotatif de la porte coupe-feu (100) dans un raccord d'angle inférieur (310-1).

24. Verre ignifuge (100) selon la revendication 23, **caractérisé en ce que** la porte coupe-feu (100) présente un deuxième élément de jonction (330) pouvant être vissé avec celle-ci, lequel est relié avec un second palier (320-2) pour un montage rotatif de la porte coupe-feu (100) dans un raccord d'angle supérieur (310-2).

25. Procédé pour la préparation d'un verre ignifuge (100) comprenant les étapes : de superposition de plusieurs plaques de verre (110-1, 110-2, 110-3) et d'insertion de matériau ignifuge (120-1, 120-2) entre les plaques de verre (110-1, 110-2, 110-3), de sorte que sont créées entre les surfaces transversales (112-1, 112-2, 112-3) de deux plaques de verre voisines, des surfaces libres (122-1, 122-2) du matériau ignifuge, lesquelles ne sont pas recouvertes par une des plaques de verre, et de prévision d'une couche d'étanchéité (130) pour étanchéifier les surfaces libres du matériau ignifuge (120-1, 120-2), **caractérisé en ce que** la couche d'étanchéité est réalisée par application d'une couche d'étanchéité essentiellement exclusivement dans le domaine des surfaces frontales du verre ignifuge (100), la couche d'étanchéité étant constituée d'un adhésif-matériau d'étanchéité de silane/époxyde, le matériau ignifuge comprenant un verre soluble, de l'eau et d'autres additifs.

26. Procédé selon la revendication 25, **caractérisé en ce que** 1"adhésif-matériau d'étanchéité de silane/époxyde est choisi selon l'une des revendications 2-24.

27. Utilisation d'un adhésif-matériau d'étanchéité de silane/époxyde pour étanchéifier les surfaces libres du matériau ignifuge de verres ignifuges, le matériau ignifuge comprenant un verre soluble, de l'eau et d'autres additifs.
